# EUROPÄISCHE PATENTSCHRIFT

(11) **EP 2 370 315 B1**
(45) Veröffentlichungstag und Bekanntmachung des Hinweises auf die Patenterteilung: **09.01.2013**
(21) Anmeldenummer: 09763921.5
(22) Anmeldetag: 24.11.2009
(51) Int. Cl.: B64C 1/06, B64C 1/12, B64C 3/18

(54) **FLÄCHIGES BAUTEIL EINES FLUGGERÄTES UND VERFAHREN ZU DESSEN HERSTELLUNG**
PLANAR COMPONENT OF AN AIRCRAFT AND METHOD FOR PRODUCING THE SAME
ÉLÉMENT PLAN D'UN AÉRONEF ET SON PROCÉDÉ DE PRODUCTION

(30) Priorität: 28.11.2008 DE 102008059653
(43) Veröffentlichungstag der Anmeldung: 05.10.2011
(73) Patentinhaber: GKN Aerospace Services Limited, East Cowes, Isle of Wight PO32 6RA (GB)
(72) Erfinder: RICHMOND, Nolan, 80686 München (DE); RITSCHEL, Thomas, 80687 München (DE)
(74) Vertreter: Heine, Christian Klaus
(86) Internationale Anmeldenummer: PCT/EP2009/065764
(87) Internationale Veröffentlichungsnummer: WO 2010/060908

(56) Entgegenhaltungen:
- WO-A1-2008/037847
- DE-A1- 1 704 670
- US-A- 4 966 802
- US-A1- 2004 035 979

## Beschreibung

Die vorliegende Erfindung betrifft ein flächiges Bauteil eines Fluggerätes, insbesondere eines Flugzeuges oder Helikopters, das eine Fläche mit einer Materialdicke bildet und Stege (Stringer und Rippen) mit einer Steghöhe aufweist, die Teilflächen des flächigen Bauteils bilden. Solche flächigen Bauteile finden insbesondere Anwendung als Flügel, Rumpfkomponenten, Gehäuse von Antriebsaggregaten etc. in Leichtbau-Technik aus faserverstärktem Verbundwerkstoff. Darüber hinaus wird ein Verfahren zur Herstellung eines solchen flächigen Bauteils angegeben.

Im Hinblick auf die Bestrebungen, Flugzeuge in Zukunft ökologisch angepasst sowie kostengünstig in der Herstellung und im Betrieb bereitzustellen und dennoch den strengsten Sicherheitsbestimmungen gerecht zu werden, wird zunehmend nach Möglichkeiten gesucht, die essentiellen Primärstrukturen (z. B. Flügel- oder Rumpfkomponenten) nicht mehr aus Aluminium sondern mit faserverstärktem Verbundwerkstoff herzustellen. Mit dieser Leichtbau-Technik kann insbesondere das Gewicht der Flugzeuge deutlich reduziert werden. Bei der Herstellung solcher essentiellen Primärstrukturen ist zu berücksichtigen, dass diese beachtliche Ausmaße annehmen, so sind beispielsweise die Landeklappen von Flugzeugen Bauteile, die sich über mehrere Meter erstrecken. Diese Bauteile sind zudem hohen Belastungen im Betrieb ausgesetzt und stellen damit sicherheitskritische Bauteile dar, bei denen besondere Festigkeits-, Steifigkeits- und Qualitätsanforderungen eingehalten werden müssen.

Solche faserverstärkten Verbundwerkstoffe umfassen im Allgemeinen zwei wesentliche Komponenten, nämlich einmal die Faser und andererseits eine die Faser umgebende Polymermatrix. Die Polymermatrix umschließt die Faser und wird beispielsweise durch eine thermische Behandlung gehärtet (Polymerisation), so dass eine dreidimensionale Vernetzung erfolgt. Mit dieser Polymerisation wird erreicht, dass die Fasern fest miteinander verbunden sind und so Kräfte, nämlich überwiegend über Schubspannungen, in die Fasern eingeleitet werden können. Als Fasern kommen neben Kohlefasern gegebenenfalls auch Glasfasern in Betracht. Kohlefasern, die heutzutage noch vergleichsweise teuer sind, bestehen regelmäßig zu mindestens 90 Gew.-% aus Kohlenstoff. Der Faserdurchmesser beträgt beispielsweise 4,5 bis 8 µm [Mikrometer]. Die Eigenschaften solcher Kohlefasern sind anisotrop. Im Gegensatz dazu besitzen Glasfasern eine amorphe Struktur und isotrope Eigenschaften. Sie bestehen überwiegend aus Siliziumoxid, wobei gegebenenfalls weitere Oxide beigemengt sein können. Während die Glasfasern relativ günstig sind, zeichnen sich die Kohlefasern durch ihre hohe Festigkeit und Steifigkeit aus.

Gerade im Flugzeugbau wird die sogenannte Prepreg-Technik eingesetzt. Bei dieser Technologie werden z. B. vorimprägnierte Gewebe oder andere auch konfektionierte textile Halbzeuge in Kunstharze getränkt und lediglich bis zu einer leichten Verfestigung (Gelierung) thermisch behandelt, so dass sie lagenweise handhabbar sind. Ein solches Prepreg-Material haftet ein wenig und ist somit gut in entsprechende Formwerkzeuge bzw. schichtweise aufeinander anzuordnen bis die gewünschte Bauteil-Form ausgebildet ist. Sind die gewünschten Schichten des Prepreg-Materials und des Vakuumaufbaus angeordnet, können sie (thermisch) ausgehärtet werden. Zum Aushärten dieser Prepreg-Bauteile kommen heutzutage sogenannte Autoklaven zum Einsatz, also Öfen, die gegebenenfalls mit Überdruck (bis zu 10 bar) über Stunden beheizt werden, um eine vollständige Aushärtung der evakuierten Bauteile zu erreichen.

In Anbetracht der Tatsache, dass bei solchen Bauteilen regelmäßig das Gewicht einerseits im Vordergrund steht, die hohen Anforderungen an die Belastbarkeit solcher Bauteile aber nicht zu vernachlässigen ist, werden diese großflächigen Bauteile regelmäßig verstärkt durch verschiedenartige Stege, die nachfolgend insbesondere als Oberbegriff für die im Flugzeugbau mit "Stringer" und "Rippen" bezeichneten Bauteile verwendet werden. Diese "Stringer" haben beispielsweise eine Steghöhe im Bereich bis 30 mm und erstrecken sich gradlinig, insbesondere parallel zueinander, in einer vorgegebenen Erstreckungsrichtung über die gesamte Fläche des Bauteils. Weiterhin sind meist in regelmäßigen Abständen noch größere, so genannte "Rippen", die bei zylindrischen Bauteilen auch Spanten genannt werden, so angeordnet dass diese zusammen mit den Stringern nach Art eines Gitters auf dem flächigen Bauteil liegen und mit ihm verbunden sind. Durch diese Anordnungen der Stege werden Teilflächen des flächigen Bauteils definiert, also Teilflächen, in denen das flächige Bauteil regelmäßig im Wesentlichen nur mit den Schichten des Prepreg-Materials gebildet ist. Um hier nun auch die im Einsatz auftretenden Kräfte aufzufangen ist es erforderlich, ausreichende Festigkeiten zu realisieren, wofür eine entsprechend Anzahl von Schichten des Prepreg-Materials eingesetzt wird, was aber die erforderliche Beulsteifigkeit nicht sicher gewährleistet. Aus diesem Grund werden regelmäßig bei Flugzeug-Bauteilen größerer Bauart eine größere Anzahl von Schichten, beispielsweise etwa 30 Schichten, eingesetzt, um hier eine ausreichende Materialdicke von mehr als 4 mm zu erreichen. Würde die Anzahl der Schichten nur nach Festigkeit ausgelegt werden, so könnte die erforderliche Dicke für Beulsteifigkeit deutlich unterschritten werden und es kann zu Stabilitätsversagen kommen, also unerwünschte, insbesondere beulenartig lokal aus der Fläche hervorstehende Verformungen des flächigen Bauteils. Somit besteht bei monolithischen ausgeführten Bauteilen häufig die Gefahr, dass sie aus Stabilitätsgründen im Bezug auf Festigkeit überdimensioniert sind, und damit das Leichtbau-Potenzial nicht ausgenutzt wird.

In der US 4,966,802 wird ein Verbund beschrieben, der aus faserverstärkten Harzelementen gefertigt und mittels Klebstoff gefügt ist. Hierbei werden Rippen und Stege, die ebenfalls aus faserverstärktem Material gefertigt sind, beispielsweise im Aushärteverfahren des auszusteifenden flächigen Bauteils mittels Aushärtens des Harzes miteinander gefügt. Solche Stege und Rippen sind aufgrund ihrer Größe jedoch nicht zur gewichtsoptimalen Aussteifung gegen Ausbeulen geeignet.

In der WO 2008/037847 wird ein gebogenes Element, wie eine Tragfläche, eine Regelungsfläche oder ein Stabilisierer für Luftfahrzeuge, beschrieben. Dabei wird vorgeschlagen, Verstärkungsprofile durch beispielsweise bogenförmige Verformungen der zu fertigenden Fläche integral einzubringen. Durch die erforderlichen großen Radien beim Ausbilden des Bogens in einem Faserverbundmaterial ist dieses Verfahren zur Aussteifung einer Fläche gegen Ausbeulen ungeeignet.

In der Offenlegungsschrift DE 1 704 670 wird ein Kunststofflaminat mit Verstärkungsrippen sowie ein Verfahren zum Herstellen dieses Laminats beschrieben. Hierbei werden Strangrippen an das Grundgewebe aufgebracht, indem sie daran angewebt werden. Ein solches Gewebe mit den Strangrippen kann auf herkömmlichen Webmaschinen hergestellt werden. Nachteilig bei solchen Geweben ist, dass die Ausrichtung der Strangrippen nicht frei von der Faserrichtung des Grundgewebes ist.

Hiervon ausgehend ist es Aufgabe der vorliegenden Erfindung, die mit Bezug auf den Stand der Technik geschilderten Probleme zumindest teilweise zu lösen. Insbesondere soll ein flächiges Bauteil angegeben werden, das im Hinblick auf das Gewicht reduziert, aber gleichzeitig im Hinblick auf die Beulsteifigkeit verbessert ist. Zudem soll ein einfaches, kostengünstiges Verfahren zur Herstellung solcher flächigen Bauteile angegeben werden.

Diese Aufgaben werden gelöst mit einem flächigen Bauteil gemäß den Merkmalen des Patentanspruchs 1 sowie einem Verfahren zur Herstellung eines flächigen Bauteils eines Fluggerätes gemäß den Merkmalen des Patentanspruchs 6. Weitere vorteilhafte Ausgestaltungen der Erfindung sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere auch im Zusammenhang mit den Figuren, erläutert die Erfindung und gibt zusätzliche Ausführungsbeispiele an.

Die Erfindung betrifft demnach zunächst ein flächiges Bauteil eines Fluggerätes aus faserverstärktem Verbundwerkstoff, das eine Fläche mit einer Materialdicke bildet und das mit wenigstens einem Verstärkungswulst einer vorgegebenen Wulstausdehnung ausgeführt ist, wobei die Wulstausdehnung maximal 10 mm beträgt.

Das flächige Bauteil dient insbesondere zum Aufbau einer Tragfläche, Leitfläche und/oder einer Außenhaut eines Fluggerätes, wobei das flächige Bauteil selbst auch im Inneren dieser Fluggerät-Komponenten angeordnet oder integriert sein kann. Im Hinblick auf die Materialien wird hier auf die einleitenden Anmerkungen verwiesen. Die Bereitstellung eines Verstärkungswulstes, der ebenfalls mit faserverstärktem Verbundwerkstoff hergestellt ist, erhöht die Stabilität des flächigen Bauteils. Dabei sind die Verstärkungswülste nicht mit den bekannten Stringer oder Rippen vergleichbar, die als senkrechte Flächen zum flächigen Bauteil mit einer Mindesterstreckung von 20 mm bis 30 mm ausgeführt sind. Der Verstärkungswulst dagegen hat im Wesentlichen keine flächige Struktur, sondern vielmehr einen eher dicken, runden, ovalen Querschnitt nach Art einer Wulst. Wenigstens die in einer Richtung senkrecht zur Fläche bzw. in Richtung der Materialdicke vorliegende maximale Wulstausdehnung beträgt demnach 10 Millimeter oder sogar nur maximal 5 Millimeter.

Das erfindungsgemäße flächige Bauteil eines Fluggerätes aus faserverstärktem Verbundwerkstoff ist weiter so gefertigt, dass es eine Fläche mit einer Materialdicke bildet und Stege mit einer Steghöhe aufweist, die Teilflächen des flächigen Bauteils bilden, wobei zumindest eine Teilfläche mit wenigstens einer Verstärkungswulst einer Wulstausdehnung ausgeführt ist, die sich über die Teilfläche zwischen den begrenzenden Stegen erstreckt.

Bei diesem flächigen Bauteil handelt es sich insbesondere um ein Bauteil aus faserverstärktem Verbundwerkstoff, wie er einleitend erläutert wurde. Auch im Hinblick auf die Anordnung der Stege und deren Ausgestaltung wird auf die Einleitung verwiesen. Um nunmehr dem Stabilitätsversagen (Beulen) entgegenzutreten und gleichzeitig eine dünne monolithischen Materialdicke zu ermöglichen, wird bei zumindest einer Teilfläche, gegebenenfalls auch bei allen Teilflächen, ein Verstärkungswulst vorgesehen. Gegebenenfalls ist auch möglich, mehrere Verstärkungswülste in eine Teilfläche zu integrieren. Grundsätzlich erstreckt sich eine solche Verstärkungswulst über die Teilfläche, wobei der Verstärkungswulst besonders bevorzugt von einem Eckbereich der Teilfläche bis zu einem gegenüberliegenden Eckbereich der Teilfläche verläuft. Für den Fall, dass mehrere Verstärkungswülste vorgesehen sind, können diese zumindest teilweise zueinander parallel und/oder schräg zueinander angeordnet sein. Darüber hinaus ist auch möglich, mit den Verstärkungswülsten eine Art Fachwerk und/oder Muster zu bilden, das insbesondere regelmäßig ist, so dass also die Zwischenbereiche zwischen den Verstärkungswülsten in etwa gleich groß sind. Die Verstärkungswülste sind bevorzugt nur hin zu einer Seite des flächigen Bauteils ausgebildet, nämlich z. B. der Seite, an der auch die Stege angeordnet sind. Die Wulstausdehnung, also beispielsweise der Durchmesser der Verstärkungswulst ist gegenüber der Steghöhe (insbesondere bezogen auf die Stringer) deutlich kleiner ausgeführt, beträgt also maximal 15 % der Steghöhe der die Teilflächen umgebenden Stege. Damit bilden die Verstärkungswülste lokal verdickte Bereiche des flächigen Bauteils, die dem Beulen entgegenwirken. Die übrigen Bereiche der Teilflächen können so mit einer reduzierten Materialdicke ausgeführt sein. Im Ergebnis lassen sich bei dieser Bauweise Gewichtserspamisse von bis zu 30 % bezogen auf das flächige Bauteil in monolithischer Bauweise ohne die Verstärkungswülste bei gleichem Beulverhalten erreichen.

Weiterhin ist wenigstens ein Verstärkungswulst mit einer Stützstruktur umgeben. Diese Stützstruktur hat insbesondere die Funktion, eine gewünschte Querschnittsform bzw. Wulstausdehnung der Verstärkungswulst während des Herstellungsverfahrens (und danach) aufrecht zu erhalten. Die Stützstruktur kann beispielsweise nach Art eines Gewebes, Netzes oder dergleichen ausgeführt sein und die wenigstens eine Verstärkungswulst zumindest teilweise (bevorzugt aber vollständig) umgeben. So kann eine Stützstruktur beispielsweise eine oder mehrere Fasern aufweisen, die die Verstärkungswulst (zumindest während der Herstellung) in der Form stabilisieren. Während der Herstellung weist eine solche Verstärkungswulst beispielsweise mehrere Stränge Kohlefasern auf, die trocken oder vorimprägniert gebündelt sind. Die Fasern der Stützstruktur können hierbei mit einem abweichenden Material gebildet sein, in Betracht kommen hierbei insbesondere Glasfasern und/oder Aramid-Fasern. Diese Stützstruktur ist insoweit auch nach der Polymerisation des flächigen Bauteils als solche erkennbar, aber innig mit dem Material der Fläche und/oder der Verstärkungswulst verbunden.

Gemäß einer bevorzugten Ausführungsvariante des flächigen Bauteils sint zumindest die Fläche und der wenigstens eine Verstärkungswulst monolithisch ausgeführt. Die Fläche, die insbesondere die sogenannte "Skin" des flächigen Bauteils darstellt, ist so beispielsweise mit den Schichten des Prepreg-Materials aus einem kohlefaser-verstärkten Verbundwerkstoff hergestellt. Auch die Verstärkungswulst ist dabei aus einem kohlefaser-verstärkten Verbundwerkstoff gebildet. Im Rahmen des Herstellungsprozesses werden diese Elemente nun so miteinander verbunden bzw. ausgehärtet, dass diese keinen signifikanten Materialübergang mehr erkennen lassen, also insbesondere monolithisch (mit anderen Worten auch einstückig) ausgebildet sind. Auch wenn es grundsätzlich möglich ist, die Fläche und den wenigstens einen Verstärkungswulst mit voneinander abweichendem Material bereitzustellen, ist jedoch zumindest eine überwiegende Übereinstimmung der Materialien hier gewünscht. Insbesondere hat der Verstärkungswulst zumindest zu 90 Gew.-% das gleiche Material wie die Fläche.

Darüber hinaus wird als vorteilhaft angesehen, dass sich mehrere Verstärkungswülste einer Teilfläche überlagern. Das heißt mit anderen Worten insbesondere, dass sich die (normalerweise gradlinig angeordneten) Verstärkungswülste kreuzen. Dabei kann sich die Gesamt-Wulstausdehnung im Überlagerungsbereich beider Verstärkungswülste vergrößern (z. B. etwa verdoppeln), es ist aber auch möglich, dass ein Verstärkungswulst auf den anderen zuläuft und im Überlagerungsbereich so reduziert ist, dass die Gesamt-Wulstausdehnung der sich überlagernden Verstärkungswülste in etwa der Wulstausdehnung eines einzelnen Verstärkungswulstes entspricht. Weiter ist bevorzugt, dass mindestens ein solcher Bereich mit überlagerten Verstärkungswülsten bei einer Teilfläche realisiert ist.

Weiter wird hier als vorteilhaft angesehen, dass die Wulstausdehnung zumindest der Materialdicke entspricht (gleich oder größer ist) und kleiner als die Steghöhe ist. Im Hinblick auf die Materialdicke wird hier ein Bereich als sinnvoll angesehen, der beispielsweise kleiner als 3,5 mm ist, also beispielsweise auch kleiner 3 mm und insbesondere etwa 2 mm beträgt. Die Materialdicke wird mit einer entsprechend (reduzierten) Anzahl von Schichten des Prepreg-Materials gebildet.

Wie bereits einleitend dargestellt, haben die Stege (Stringer) eine Steghöhe von mehr als 20 mm im Mittel, also beispielsweise etwa 30 mm. Es wird nun hier vorgeschlagen, dass die Wulstausdehnung im Zwischenbereich hinsichtlich der Materialdicke und der Steghöhe angeordnet ist. Ganz besonders bevorzugt ist dabei eine Wulstausdehnung, die mindestens doppelt so groß wie die Materialdicke ist, gegebenenfalls sogar mindestens dem Fünffachen entspricht oder sogar dem Zehnfachen der Materialdicke. Ganz besonders hat sich dabei ein Verstärkungswulst mit einem etwa halbkreisförmigen Querschnitt herausgestellt. Dabei beträgt die Wulstausdehnung in Richtung der Materialdicke der Fläche bevorzugt zwischen 2 und 4 mm. Senkrecht zur Materialdicke kann die Wulstausdehnung beispielsweise bis zu 10 mm betragen. Nur der Vollständigkeit halber sei hier darauf hingewiesen, dass eine solche Ausgestaltung des Querschnitts der Verstärkungswulst nicht zwingend ist, sondern hierbei auch Anpassungen an die jeweiligen Belastungen und/oder Formen des flächigen Bauteils zu einer abweichenden Gestalt führen können. Ebenso ist möglich, verschiedene Verstärkungswülste hinsichtlich der Querschnittsform und/oder der Wulstausdehnung vorzusehen.

Gemäß einem weiteren Aspekt der Erfindung wird auch ein Verfahren zur Herstellung eines flächigen Bauteils eines Fluggerätes vorgeschlagen, das zumindest die folgenden Schritte umfasst:
a) Ausbilden einer Fläche durch Laminieren mehrere Schichten eines aushärtbaren Materials;
b) Anordnen wenigstens einer Verstärkungswulst eines aushärtbaren Materials auf der Fläche;
c) Aushärten der Fläche und des wenigstens einen Verstärkungswulstes gemeinsam zu einem monolithischen flächigen Bauteil,
wobei der wenigstens eine Verstärkungswulst mit zumindest einem der nachfolgenden Prozesse bereitgestellt wird:
- Verdrehen einer Mehrzahl von Strängen des aushärtbaren Materials;
- Bündeln mehrerer Stränge des aushärtbaren Materials;
- Fixieren einer Mehrzahl von Strängen des aushärtbaren Materials zueinander;
- Anordnen einer Mehrzahl von Strängen des aushärtbaren Materials an einer Stützstruktur.

Das hier erfindungsgemäße Verfahren dient insbesondere zur Herstellung des erfindungsgemäßen flächigen Bauteils.

Bei Schritt a) werden insbesondere mehrere Schichten eines kohleverstärkten Grundwerkstoffes eingesetzt. Die Kohlefasern sind bevorzugt als im Ausgangszustand endlose Langfasern ausgeführt, die in den Bauteilen schichtweise, gegebenenfalls in unterschiedlicher Ausrichtung der Faserlängsrichtung, angeordnet sind. Mehrere solcher Schichten können nun aufeinander und/oder nebeneinander auf einer Auflage positioniert werden, so dass die Fläche, insbesondere mit ihrer gekrümmten Gestalt gebildet ist. Diese Fläche kann dabei eine Größe von mehreren Quadratmetern aufweisen und hat insbesondere eine (leicht) gebogene Form. Das Ausbilden des Laminats erfolgt insbesondere in einem einseitigen Werkzeug, das die gewünschte Kontur bzw. Gestalt der Oberfläche ausbildet.

Gemeinsam mit Schritt a) oder auch danach werden nun die Verstärkungswülste (im ausgehärteten oder nicht ausgehärteten Zustand) auf der Fläche angeordnet. Grundsätzlich ist möglich, dass die Stege gleichzeitig mit Schritt a) und/oder b) ausgebildet werden, das ist aber nicht zwingend erforderlich. So können die Stege auch nachträglich an das ausgehärtete Bauteil befestigt (geklebt) werden. Die Anordnung der Verstärkungswülste erfolgt dabei mit der oben beschriebenen Ausrichtung bzw. dem erläuterten Muster entsprechend den gewünschten Anforderungen des flächigen Bauteils. Hier sei auch darauf hingewiesen, dass die Schichten und/oder der Verstärkungswulst ggf. noch separat behandelt werden können (z. B. imprägniert), um schließlich aushärtbar zu sein. Somit erfasst der Begriff "Aushärtbares Material" gegebenenfalls auch ein Zwischenprodukt, das (noch) nicht-imprägniert ist, wie ein trockenes textiles Halbzeug bzw. Stränge aus Kohlefaser, Glasfaser, Aramidfaser.

Das Aushärten der Fläche gemäß Schritt c) erfolgt bevorzugt thermisch und unter Vakuum mit Überdruck. Aufgrund des direkten Kontaktes der Verstärkungswulst mit der Fläche entsteht durch das Aushärten eine monolithische, einstückige, Ausgestaltung des flächigen Bauteils.

Weiter wird der wenigstens eine Verstärkungswulst mit zumindest einem der nachfolgenden Prozesse bereitgestellt:
- Verdrehen einer Mehrzahl von Strängen des aushärtbaren Materials;
- Bündeln mehrerer Stränge des aushärtbaren Materials;
- Fixieren einer Mehrzahl von Strängen des aushärtbaren Materials zueinander;
- Anordnen einer Mehrzahl von Strängen des aushärtbaren Materials an einer Stützstruktur.

Die vorstehend angeführten Prozesse haben insbesondere im Fokus, dass die Handhabung der Verstärkungswülste bei der Herstellung vereinfacht wird und/oder die Form (im Querschnitt oder in Längsrichtung) der Verstärkungswülste auch während des Aushärtens im Wesentlichen beibehalten werden kann. So wird hier beispielsweise vorgeschlagen, den Verstärkungswulst mit einer Mehrzahl von Strängen (bevorzugt aus Kohlefasern) bereitzustellen, die miteinander verdreht bzw. gegeneinander verdrillt sind. In einigen Fällen kann es auch sinnvoll sein, dass die Stränge z. B. nach Art eines Gewebes miteinander fixiert sind. Darüber hinaus ist auch möglich, dass mehrere Stränge des aushärtbaren Materials zu den Verstärkungswülsten gebündelt sind, wobei dies gegebenenfalls auch über geeignete Haftmittel erfolgen kann. Die Anzahl der Stränge ist dabei unter Berücksichtigung der gewünschten Gestalt der Verstärkungswülste auf der Fläche des flächigen Bauteils auszuwählen. Falls erforderlich können auch zusätzliche Mittel eingesetzt werden, um die Mehrzahl von Strängen des aushärtbaren Materials zueinander zu fixieren, wobei diese Mittel mit demselben Material der Stränge oder einem ebenfalls geeigneten Material ausgeführt sein können. Schließlich ist auch vorteilhaft, die Mehrzahl der Stränge über eine geeignete Stützstruktur formgenau zu halten, wobei diese Stützstruktur gerade den oben geschilderten Schritt c) nicht beeinträchtigen sollte. Die Stützstruktur kann also beispielsweise auch als ein die Stränge umgebendes Netz oder aber als Fixierungsfasern hin zu einer textilen Grundstruktur (aus aushärtbaren Material, Kohlefaser, Glasfasern, Aramidfasern) ausgeführt sein.

Des Weiteren wird auch als vorteilhaft angesehen, dass die aushärtbaren Materialien der Schichten und des wenigstens einen Verstärkungswulstes in den Schritten a) und b) mit Harz imprägniert sind. Das heißt mit anderen Worten auch, dass hierbei insbesondere sogenannte Prepreg-Materialien eingesetzt werden, also Gewebe oder andere Faserformen aus Kohlefasern (Preformling), die kunstharzgetränkt sind. Als Harz kommt insbesondere eines der folgenden in Betracht: Epoxidharz, Phenolharz, Bismaleimidharz oder Polyesterharz.

Darüber hinaus wird als vorteilhaft angesehen, dass Schritt c) in einem Autoklaven durchgeführt wird. Dies eröffnet die Möglichkeit, zur Herstellung solcher flächigen Bauteile auf bekannte Technologien und Werkzeuge zurückzugreifen. Jedenfalls können bei der Herstellung auch viele andere Prozesse hierbei eingesetzt werden, wobei beispielhaft Infiltrationsprozesse wie RTM *(resin transfer molding*) oder VARI *(vacuum assisted resin infiltrated)* genannt werden.

Die Vorteile der Erfindung, insbesondere das reduzierte Gewicht des flächigen Bauteils, lassen sich insbesondere bei einem Fluggerät, aufweisend zumindest ein flächiges Bauteil der hier erfindungsgemäß beschriebenen Art, das gegebenenfalls nach dem hier erfindungsgemäßen Herstellungsverfahren gefertigt wird, erkennen. Als Fluggerät kommt insbesondere ein Passagier-Flugzeug oder ein Helikopter in Betracht.

Mit dem hier angegebenen flächigen Bauteil, bzw. dem vorgeschlagenen Herstellungsverfahren dafür, lassen sich eine Reihe beachtlicher Vorteile erreichen. So ist beispielsweise eine einfache Prüfung der Bauteile möglich, insbesondere eine zerstörungsfreie Analyse mittels Ultraschall. Zudem kann die Herstellung des flächigen Bauteils in einem einzigen Arbeitsgang im Autoklav erfolgen. Daneben ist auch nicht zu vernachlässigen, dass die Applikation der Verstärkungswülste hinsichtlich Anzahl, Art und/oder Position anwendungsorientiert bzw. belastungsorientiert (und ggf. sogar automatisch) erfolgen kann.

Die Erfindung sowie das technische Umfeld werden nachfolgend anhand der Figuren näher erläutert. Es ist darauf hinzuweisen, dass die in den Figuren veranschaulichten Ausführungsvarianten zwar bevorzugt sind, die Erfindung aber nicht darauf beschränkt ist. Es zeigen schematisch:
- Fig. 1:: einen Teilquerschnitt durch ein flächiges Bauteil,
- Fig. 2:: eine erste Ausführungsvariante eines Verstärkungswulstes,
- Fig. 3:: eine zweite Ausführungsvariante des Verstärkungswulstes,
- Fig. 4:: eine dritte Ausführungsvariante des Verstärkungswulstes,
- Fig. 5:: eine perspektivische Darstellung eines flächigen Bauteils, und
- Fig. 6:: ein Fluggerät.

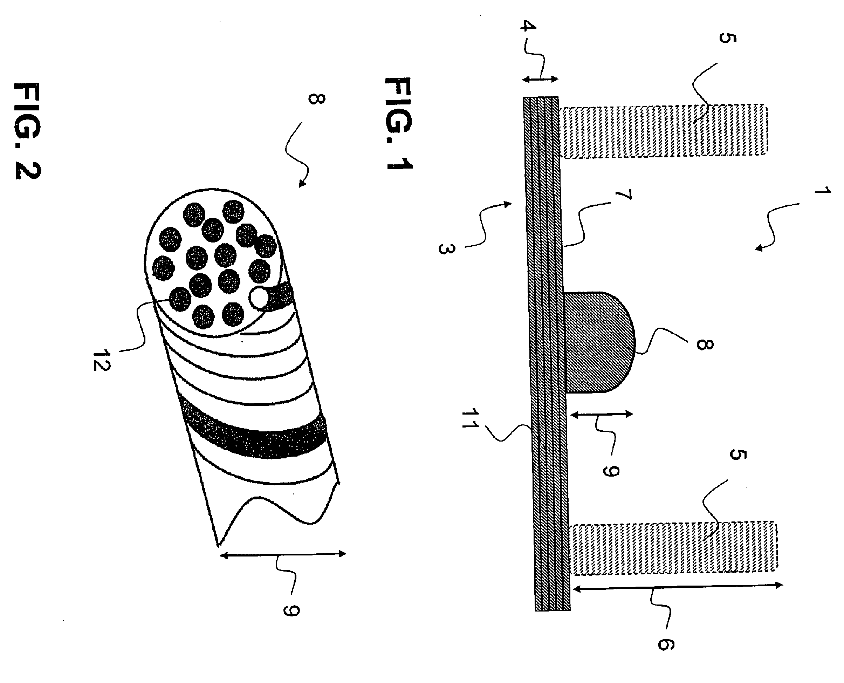

Die Fig. 1 zeigt schematisch und in einem Querschnitt ein Detail eines flächigen Bauteils 1, wie es später bei einem Fluggerät eingesetzt werden kann. Unten in Fig. 1 ist die Fläche 3 veranschaulicht, die hier jedoch nach rechts und links verkürzt dargestellt ist. Die Fläche 3 bildet beispielsweise ein Areal mit den Abmaßen von 3 m x 10 m. Zum Aufbau bzw. zur Herstellung dieser Fläche 3 wird hier eine Mehrzahl von Schichten 11 aus vorimprägniertem Kohlefaser-Gewebe eingesetzt. Diese werden während der Herstellung aufeinander und nebeneinander angeordnet, so dass letztendlich eine Materialdicke 4 der gewünschten Art erreicht wird, wobei die Materialdicke 4 bevorzugt kleiner 3,5 mm beträgt. Auch wenn hier die Fläche 3 im Wesentlichen eben dargestellt ist, so ist diese doch regelmäßig gekrümmt.

Zur Versteifung der Fläche 3 sind auf einer Seite (hier oben) eine Mehrzahl von Stegen 5 (Stringer) vorgesehen, die eine vorgegebene Steghöhe 6 bilden. In Fig. 1 sind die Stege 5 nur angedeutet, womit zum Ausdruck gebracht werden soll, dass die Stege 5 beispielsweise erst nach dem gemeinsamen Aushärten der Verstärkungswülste und der Schichten 11 angefügt werden. Gleichwohl ist die Lage bzw. Position dieser Stege 5 mit Bezug auf die Fläche 3 zuvor bekannt, so dass die Teilflächen 7 zwischen den Stegen 5 identifizierbar sind. Genau in diesen Teilflächen 7, die beispielsweise Abmessungen im Bereich von 300 mm x 200 mm bilden, sind nun bevorzugt eine Mehrzahl von Verstärkungswülsten 8 vorgesehen (auch wenn hier nur ein einzelner Verstärkungswulst 8 dargestellt ist). In Fig. 1 verläuft der Verstärkungswulst 8 parallel zu den Stegen 5 und erstreckt sich über die gesamte Teilfläche 7. Der Verstärkungswulst 8 hat dabei einen etwa halbkreisförmigen Querschnitt mit einer Wulstausdehnung 9. Hierbei ist zu erkennen, dass die Wulstausdehnung 9 in einem Bereich liegt, der größer als die Materialdicke 4 aber kleiner als die Steghöhe 6 ist.

Die Fig. 2, 3 und 4 zeigen unterschiedliche Ausführungsvarianten für Verstärkungswülste, wie sie zur Herstellung des flächigen Bauteils eingesetzt werden können. Dabei handelt es sich insbesondere um eine Mehrzahl von Strängen 12 des aushärtbaren Materials, insbesondere um (imprägnierte) Kohlenstofffasern. In Fig. 2 sind die Stränge 12 schraubenförmig miteinander verdreht und bilden somit allein die gewünschte Wulstausdehnung 9. Klar ist, dass gerade bei einer Herstellung im Autoklaven eine Deformierung des Verstärkungswulst 8 einsetzen kann, so dass die Wulstausdehnung 9 des Ausgangsmaterials regelmäßig größer ist als die Wulstausdehnung 9 am ausgehärteten flächigen Bauteil.

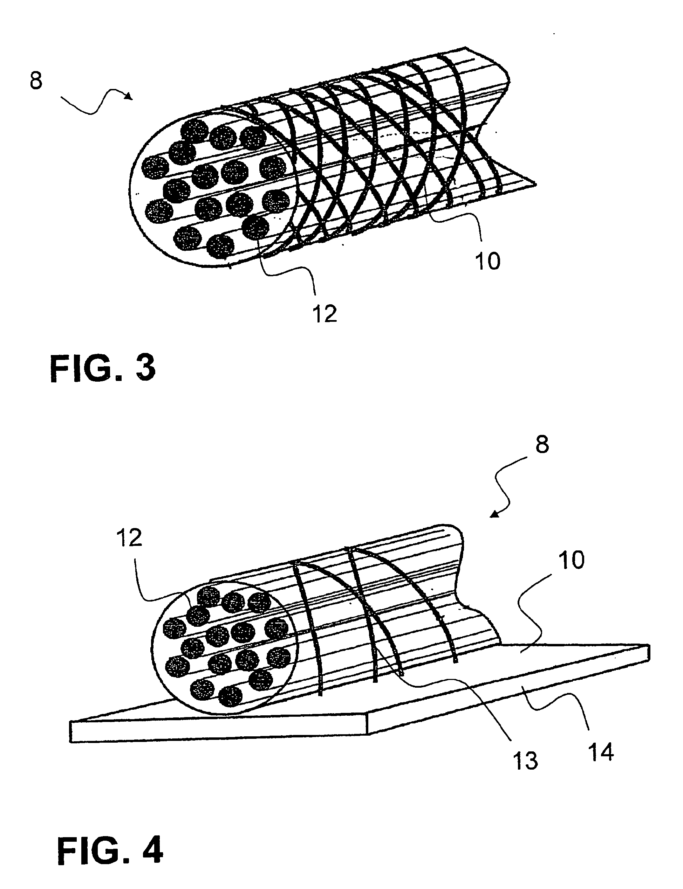

In Fig. 3 sind die Stränge 12 parallel zueinander ausgerichtet, aber von einer netzartigen Stützstruktur 10 umgeben, welche die Stränge 12 bündelt. Die Stützstruktur 10 kann beispielsweise mit einer Mehrzahl von Fasern aus Glas oder Aramid gebildet sein. Während in Fig. 3 die Stützstruktur nach Art eines Gewebes bzw. einer Umflechtung oder Umwicklung ausgeführt ist, zeigt Fig. 4 die Anordnung der parallel zueinander ausgerichteten Stränge 12 auf einer flächigen textilen Grundstruktur 14, wobei die Fasern 13 der Stützstruktur 10 die Stränge 12 überspannen und mit der Grundstruktur 14 (z. B. umfassend Kohlefasern, Polymerfasern und/oder Glasfasern) verbunden sind. Diese drei Ausführungsvarianten des Verstärkungswulstes 8 lassen sich bei der Herstellung sehr leicht handhaben und können so formstabil und passgenau auf die gewünschte Stelle der Teilflächen des flächigen Bauteils positioniert werden. Dies gilt insbesondere für den Fall, dass die Verstärkungswülste und/oder die (Schichten der) Fläche bereits mit Harz vorimprägniert sind, so dass dadurch die Positionierung auf der Fläche erleichtert wird.

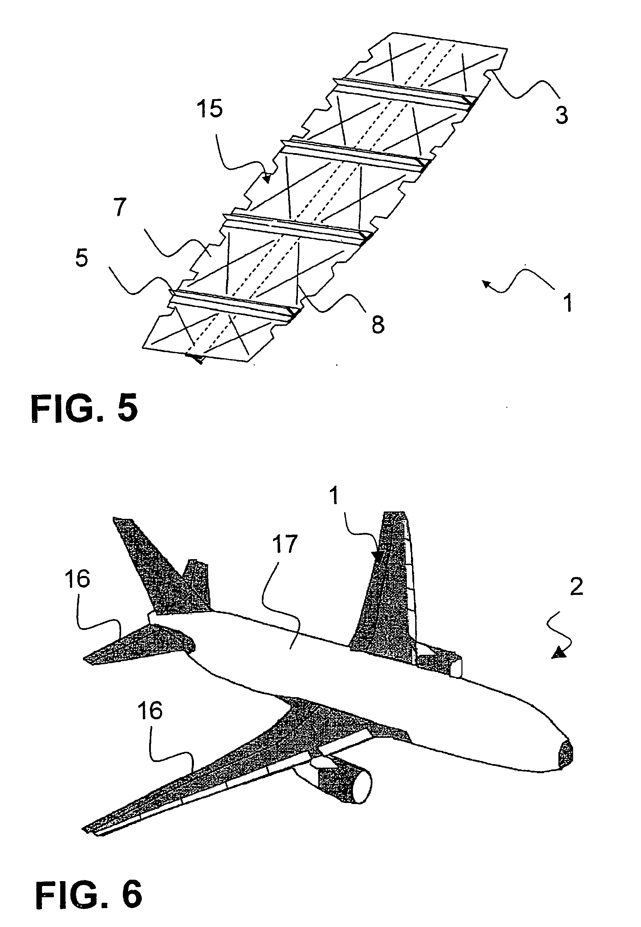

In Fig. 5 ist nun perspektivisch ein weiteres flächiges Bauteil 1 dargestellt. Es ist zu erkennen, dass die Fläche 3 auf beiden Seiten 15 durch Stege 5 in eine Mehrzahl von Teilflächen 7 unterteilt ist. Bei dieser Ausführungsvariante sind auf derselben Seite 15 wie die Stege 5 zusätzlich Verstärkungswülste 8 vorgesehen. Die Anordnung erfolgt aber in dieser Weise, dass in jeder Teilfläche 7 zwei sich kreuzende Verstärkungswülste 8 vorgesehen sind, die jeweils gradlinig diagonal zu den Grenzen der Teilflächen 7 angeordnet sind.

Fig. 6 veranschaulicht nunmehr ein Fluggerät 2 nach Art eines Passagierflugzeugs, wobei unterschiedliche flächige Bauteile 1 hervorgehoben sind, die mit der Erfindung nun deutlich gewichtsreduziert bereitgestellt werden können. So bildet das flächige Bauteil 1 beispielsweise Strömungsflächen 16 oder Komponenten des Rumpfes 17 aus. Darüber hinaus können beispielsweise auch Komponenten der Außenhaut der Triebwerke und/oder der Nase des Fluggeräts 2 auf diese Weise hergestellt werden. Es ist klar erkennbar, dass bereits die großflächigen, primären Strukturbauteile des Fluggerätes 2 mit dem vorgeschlagenen Verfahren hergestellt werden können, wobei gleichermaßen das Gewicht des Fluggerätes 2 deutlich reduziert werden kann. Der damit einhergehende geringere Treibstoffverbrauch und/oder die höhere Zuladung sind wesentliche Vorteile der Erfindung.

### Bezugszeichenliste

- 1: Flächiges Bauteil
- 2: Fluggerät
- 3: Fläche
- 4: Materialdicke
- 5: Steg
- 6: Steghöhe
- 7: Teilfläche
- 8: Verstärkungswulst
- 9: Wulstausdehnung
- 10: Stützstruktur
- 11: Schicht
- 12: Strang
- 13: Faser
- 14: Grundstruktur
- 15: Seite
- 16: Strömungsfläche
- 17: Rumpf

## Patentansprüche

1. Flächiges Bauteil (1) für ein Fluggerät (2) aus faserverstärktem Verbundwerkstoff, das eine Fläche (3) mit einer Materialdicke (4) bildet, das weiterhin Stege (5) mit einer Steghöhe (6) aufweist, die Teilflächen (7) des flächigen Bauteils (1) bilden, wobei zumindest eine Teilfläche (7) mit wenigstens einem Verstärkungswulst (8) einer Wulstausdehnung (9) ausgeführt ist, die sich über die Teilfläche (7) sehen den Stegen (5) erstreckt, wobei der wenigstens eine Verstärkungswulst (8) eine Wulstausdehnung (9) von maximal 10 mm aufweist und somit maximal 15 % der Steghöhe (6) der die Teilflächen (7) umgebenden Stege (5) beträgt sowie einen runden, ovalen oder halbkreisförmigen Querschnitt hat, wobei der Verstärkungswulst mit einer Stützstruktur (10) umgeben ist.

2. Flächiges Bauteil (1) nach Patentanspruch 1, bei dem zumindest die Fläche (3) und der wenigstens eine Verstärkungswulst (8) monolithisch ausgeführt sind.

3. Flächiges Bauteil (1) nach einem der vorhergehenden Patentansprüche, bei dem sich mehrere Verstärkungswülste (8) einer Teilfläche (7) überlagern.

4. Flächiges Bauteil (1) nach einem der vorhergehenden Patentansprüche, bei dem die Wulstausdehnung (9) zumindest der Materialdicke (4) entspricht.

5. Flächiges Bauteil (1) nach einem der vorhergehenden Patentansprüche, wobei die Stützstruktur (10) als Netz oder Gewebe ausgeführt ist, dass mit einem von der Verstärkungswulst abweichenden Material gebildet ist.

6. Verfahren zur Herstellung eines flächigen Bauteils (1) eines Fluggerätes (2) umfassend zumindest die folgenden Schritte:
a) Ausbilden einer Fläche (3) durch Laminieren mehrerer Schichten (11) eines aushärtbaren Materials;
b) Anordnen wenigstens eines Verstärkungswulstes (8) eines aushärtbaren Materials auf der Fläche (3);
c) Aushärten der Fläche (3) und des wenigstens einen Verstärkungswulstes (8) gemeinsam zu einem monolithischen flächigen Bauteil (1),
**dadurch gekennzeichnet, dass**
der wenigstens eine Verstärkungswulst (8) mit zumindest einem der nachfolgenden Prozesse bereitgestellt wird:
- Verdrehen einer Mehrzahl von Strängen (12) des aushärtbaren Materials;
- Bündeln mehrerer Stränge (12) des aushärtbaren Materials;
- Fixieren einer Mehrzahl von Strängen (12) des aushärtbaren Materials zueinander;
- Anordnen einer Mehrzahl von Strängen (12) des aushärtbaren Materials an einer Stützstruktur (10).

7. Verfahren nach Patentanspruch 6, bei dem die aushärtbaren Materialien der Schichten (11) und des mindestens einen Verstärkungswulstes (8) in den Schritten a) und b) mit Harz imprägniert sind.

8. Verfahren nach einem der Patentansprüche 6 oder 7, bei dem Schritt c) in einem Autoklaven durchgeführt wird.

9. Fluggerät (2), aufweisend zumindest ein flächiges Bauteil (1) nach einem der Patentansprüche 1 bis 5 oder hergestellt nach einem Verfahren gemäß einem der Patentansprüche 6 bis 8.

## Claims

1. Planar component (1) for an aircraft (2), made of fiber-reinforced composite material, which forms a surface area (3) with a material thickness (4), which further has webs (5) with a web height (6) which form partial areas (7) of the planar component (1), at least one partial area (7) being configured with at least one reinforcing bead (8) with a bead extent (9), with the reinforcing bead (8) extending over the partial area (7) between the webs (5), wherein the at least one reinforcing bead (8) has an extent (9) of at most 10 mm and is therefore at most 15% of the web height (6) of the webs (5) surrounding the partial areas (7) and wherein the reinforcing bead (8) has a round, oval or half-circle formed cross section, wherein the at least one reinforcing bead (8) is surrounded by a supporting structure (10).

2. Planar component (1) according to claim 1, in which at least the surface area (3) and the at least one reinforcing bead (8) are of a monolithic configuration.

3. Planar component (1) according to one of the preceding claims, in which a number of reinforcing beads (8) of a partial area (7) are superposed.

4. Planar component (1) according to one of the preceding claims, in which the bead extent (9) corresponds at least to the material thickness (4).

5. Planar component (1) according to one of the preceding claims, in which the supporting structure (10) is configured as a web or woven fabric, in which the web or woven fabric is formed with a different material than the reinforcing bead.

6. Method for producing a planar component (1) of an aircraft (2), comprising at least the following steps:
a) forming a surface area (3) by laminating a number of layers (11) of a curable material;
b) arranging at least one reinforcing bead (8) of a curable material on the surface area (3);
c) curing the surface area (3) and the at least one reinforcing bead (8) together to form a monolithic planar component (1), **characterized in that**
the at least one reinforcing bead (8) is provided by at least one of the following processes:
- twisting a plurality of strands (12) of the curable material;
- bundling a number of strands (12) of the curable material;
- fixing a plurality of strands (12) of the curable material in relation to one another;
- arranging a plurality of strands (12) of the curable material on a supporting structure (10).

7. Method according to claim 6, in which the curable materials of the layers (11) and of the at least one reinforcing bead (8) are impregnated with resin in steps a) and b).

8. Method according to one of the preceding claims 6 or 7, in which step c) is carried out in an autoclave.

9. Aircraft (2), having at least one planar component (1) according to one of claims 1 to 5 or produced by a method according to one of claims 6 to 8.

## Revendications

1. Composant plan (1) pour un aéronef (2) en matériau composite renforcé par des fibres, qui forme une surface (3) ayant une épaisseur de matériau (4), qui présente en outre des nervures (5) ayant une hauteur de nervure (6) et formant des surfaces partielles (7) du composant plan (1), au moins une surface partielle (7) étant réalisée avec au moins un bourrelet de renforcement (8) ayant une étendue de bourrelet (9) qui s'étend sur la surface partielle (7) entre les nervures (5), l'au moins un bourrelet de renforcement (8) présentant une étendue de bourrelet (9) de 10 mm au maximum et valant ainsi au maximum 15 % de la hauteur de nervure (6) des nervures (5) entourant la surface partielle (7), et ayant une section transversale ronde, ovale ou semi-circulaire, le bourrelet de renforcement étant entouré par une structure de support (10).

2. Composant plan (1) selon la revendication 1, dans lequel au moins la surface (3) et l'au moins un bourrelet de renforcement (8) sont réalisés sous forme monolithique.

3. Composant plan (1) selon l'une quelconque des revendications précédentes, dans lequel plusieurs bourrelets de renforcement (8) d'une surface partielle (7) sont superposés.

4. Composant plan (1) selon l'une quelconque des revendications précédentes, dans lequel l'étendue de bourrelet (9) correspond au moins à l'épaisseur de matériau (4).

5. Composant plan (1) selon l'une quelconque des revendications précédentes, dans lequel la structure de support (10) est réalisée sous forme de filet ou de tissu, formé avec un matériau différent de celui du bourrelet de renforcement.

6. Procédé de fabrication d'un composant plan (1) pour un aéronef (2), comprenant au moins les étapes suivantes :
a) réalisation d'une surface (3) par laminage de plusieurs couches (11) d'un matériau durcissable ;
b) agencement d'au moins un bourrelet de renforcement (8) d'un matériau durcissable sur la surface (3) ;
c) durcissement de la surface (3) et de l'au moins un bourrelet de renforcement (8) conjointement à un composant plan monolithique (1),
**caractérisé en ce que**
l'au moins un bourrelet de renforcement (8) est réalisé avec au moins l'un des processus suivants :
- torsion d'une pluralité de barres (12) du matériau durcissable ;
- mise en faisceau de plusieurs barres (12) du matériau durcissable ;
- fixation d'une pluralité de barres (12) du matériau durcissable les unes aux autres ;
- agencement d'une pluralité de barres (12) du matériau durcissable sur une structure de support (10).

7. Procédé selon la revendication 6, dans lequel les matériaux durcissables des couches (11) et de l'au moins un bourrelet de renforcement (8) dans les étapes a) et b) sont imprégnés de résine.

8. Procédé selon l'une quelconque des revendications 6 ou 7, dans lequel l'étape c) est réalisée dans un autoclave.

9. Aéronef (2) présentant au moins un composant plan (1) selon l'une quelconque des revendications 1 à 5 ou fabriqué selon un procédé selon l'une quelconque des revendications 6 à 8.
